# EUROPÄISCHE PATENTSCHRIFT

(11) **EP 2 163 776 B1**
(45) Veröffentlichungstag und Bekanntmachung des Hinweises auf die Patenterteilung: **09.11.2016**
(21) Anmeldenummer: 09010365.6
(22) Anmeldetag: 12.08.2009
(51) Int. Cl.: F16D 3/06

(54) **Gelenkwelle für Fahrzeuge**
Drive shaft for vehicles
Arbre de transmission pour véhicules

(30) Priorität: 10.09.2008 DE 102008046587
(43) Veröffentlichungstag der Anmeldung: 17.03.2010
(73) Patentinhaber: Bayerische Motoren Werke Aktiengesellschaft, 80809 München (DE)
(72) Erfinder: Dullenkopf, Dirk, 80807 München (DE); Kornprobst, Wolfgang, 92345 Töging (DE); Tichelmann, Patrick, 64572 Büttelborn (DE); Schürmann, Helmut, 67133 Maxdorf (DE); Hahn, Wolfgang, 85248 Schwabhausen (DE)
(74) Vertreter: Diener, Reinhold Jürgen

(56) Entgegenhaltungen:
- EP-A2- 0 800 007
- DE-A1- 10 022 663
- FR-A1- 2 600 133
- US-A- 3 638 455
- US-A- 5 601 493
- US-A1- 2006 130 309

## Beschreibung

Die vorliegende Erfindung betrifft eine Gelenkwelle für Fahrzeuge gemäß dem Oberbegriff des Patentanspruches 1. Eine solche Gelenkwelle ist z.B. aus der US 2006 130 309 bekannt.

Zum technischen Hintergrund der Erfindung zählen ferner die US 5,601,493 A, EP 0 800 007 A2, FR 2 600 133 A1 sowie die DE 100 22 663 A1.

Unter dem Begriff "Gelenkwelle" wird in der vorliegenden Patentanmeldung eine drehmomentübertragende Komponente eines Antriebsstrangs eines Fahrzeugs verstanden. So ist z.B. bei Fahrzeugen mit Hinterachsantrieb der Eingang des Hinterachsgetriebes über eine Gelenkwelle mit dem Ausgang des Schaltgetriebes verbunden. Gelenkwellen weisen üblicherweise ein oder mehrere Kardan- bzw. Gleichlaufgelenke sowie in der Regel mindestens ein so genanntes "Schiebestück" auf, das den bei Federbewegungen erforderlichen Längenausgleich zwischen einzelnen Gelenkwellenabschnitten ermöglicht. Schiebestücke sind in der Regel Welle-Nabe-Verbindungen mit Vielzahnprofilen.

Verschiedene Welle-Nabe-Verbindungen sind durch die DIN-Normen 5480 sowie 5460 genormt. Hochbelastete Welle- bzw. Nabe-Verbindungen, wie sie bei Schiebestücken von Antriebssträngen von Fahrzeugen zum Einsatz kommen, sind herkömmlicherweise aus Metall, ganz überwiegend aus Stahl hergestellt. Bei Schiebestücken aus Stahl können insbesondere im Bereich der Zahnfußradien sowie am "Eingang" des Schiebestücks hohe Spannungsspitzen verbunden mit einer über die Zahnlänge ungleichförmigen Torsionsbelastung der Zähne auftreten.

Aufgabe der Erfindung ist es, eine für Antriebsstränge von Fahrzeugen geeignete, gewichtsoptimierte Gelenkwelle zu schaffen, bei der Spannungsspitzen an einzelnen Stellen der Verzahnung des Schiebestücks vermieden werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Gelenkwelle für Fahrzeuge mit einem ersten Gelenkwellenabschnitt, der über ein Schiebestück mit einem zweiten Gelenkwellenabschnitt drehgekoppelt ist. Das Schiebestück weist ein mit einer Längsverzahnung versehenes, mit einem der beiden Gelenkwellenabschnitte verbundenes wellenartiges Element auf und ein mit einer zu der Längsverzahnung komplementären Längsverzahnung versehenes nabenartiges Element, das mit dem anderen Gelenkwellenabschnitt verbunden ist. Das wellenartige Element ist in das nabenartige Element eingeschoben, wodurch in gewissem Umfang eine Relativverschiebung der beiden Gelenkwellenabschnitte in einer Längsrichtung der Gelenkwelle ermöglicht wird.

Der Kern der Erfindung besteht darin, dass mindestens eine der beiden Längsverzahnungen aus einem Thermoplastmaterial hergestellt ist. Vorzugsweise ist die "Innenverzahnung" des nabenartigen Elements aus Thermoplastmaterial hergestellt. Im Vergleich zu aus Stahl hergestellten Längsverzahnungen ist eine aus Thermoplastmaterial hergestellte Verzahnung relativ "elastisch". Bei einer Drehmomentübertragung kommt es in gewissem Umfang zu einer elastischen Verformung der aus Thermoplastmaterial hergestellten Verzahnung und somit zu einer vergleichsweise gleichmäßigen Belastung der Verzahnung. Der Einsatz von Thermoplastmaterial führt also aufgrund seiner - im Vergleich zu Stahl - geringeren Steifigkeit zu einem gleichmäßigeren Tragverhalten der einzelnen Zähne bei Drehmomentbelastung.

Die aus Thermoplastmaterial hergestellte Verzahnung weist zahnartige Elemente auf, deren Zahnflanken sich "im Wesentlichen", aber nicht exakt in Längsrichtung der Gelenkwelle erstrecken. "Im wesentlichen aber nicht exakt" kann bedeuten, dass die Zähne bzw. der Zahnflanken einen spitzen Winkel mit der Längsachse der Gelenkwelle einschließen und/oder, dass die Zähne bzw. deren Zahnflanken in Längsrichtung der Gelenkwelle bogenförmig gekrümmt sind. Durch eine derartige, in Längsrichtung der Gelenkwelle sich verändernde Kontur, die der bei einer Drehmomentübertragung auftretenden Deformation der Zähne angepasst ist, können Spannungsspitzen in der Verzahnung, insbesondere am Eingang der "Welle-Nabe-Verbindung" vermieden bzw. zumindest verringert werden.

Die Längsverzahnung aus Thermoplastmaterial kann durch Spritzgießen hergestellt werden. Um eine Übertragung größerer Drehmomente zu ermöglichen, kann für die Verzahnung mit Kurzfasern verstärktes Thermoplastmaterial verwendet werden..

Die Verzahnung aus Thermoplastmaterial kann an ein Bauteil, z. B. an die Innenseite eines Rings angespritzt sein. Der Ring kann aus einem Laminatmaterial hergestellt sein, welches durch Endlosphasern verstärkt sein kann. Mit diesem Ring kann dann ein Längspressverband hergestellt werden.

Wenngleich die Erfindung bislang primär im Zusammenhang mit einer Längsverzahnung beschrieben wurde, die an der Innenseite des nabenartigen Elements des Schiebestücks vorgesehen ist, kann selbstverständlich auch oder alternativ dazu die an der Außenseite des wellenartigen Elements des Schiebestücks vorgesehene Verzahnung aus einem Thermoplast-material hergestellt sein.

Im Folgenden wird die Erfindung im Zusammenhang mit der Zeichnung näher erläutert.
- Figur 1: zeigt das Grundprinzip eines Schiebestücks gemäß der Erfindung;
- Figur 2: zeigt in stark vergrößerter Darstellung die bogenförmige Gestaltung eines Zahns einer aus Thermoplastmaterial hergestellten Längsverzahnung.

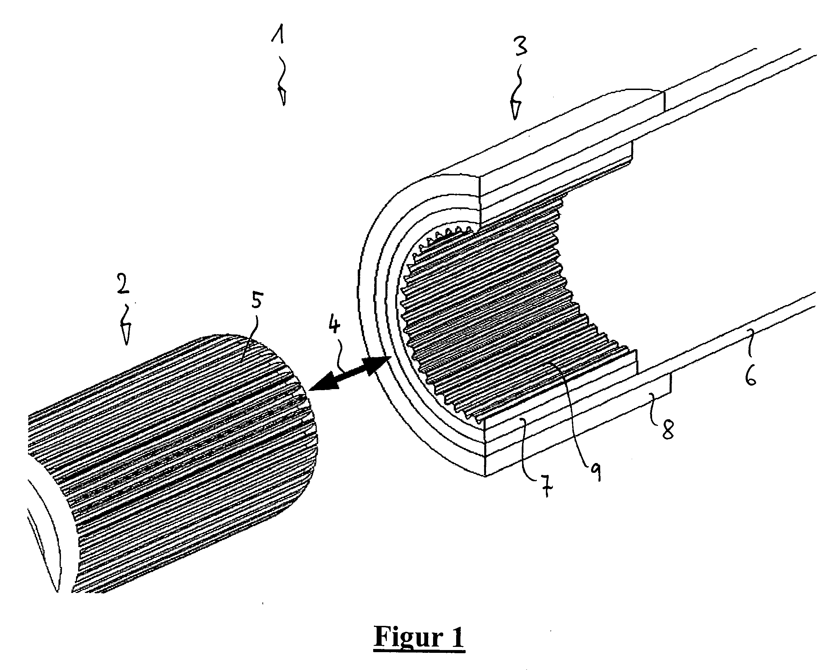

Figur 1 zeigt ein Schiebestück 1 einer hier nicht näher dargestellten Gelenkwelle. Das Schiebestück 1 weist ein wellenartiges Element 2 und ein nabenartiges Element 3 auf. An der Außenseite des wellenartigen Elements 2 ist eine sich in einer Längsrichtung 4 der Gelenkwelle (nicht dargestellt) erstreckende Längsverzahnung 5 vorgesehen.

Das nabenartige Element 3 ist durch einen Längspressverband gebildet. Der Längspressverband weist ein Gelenkwellenrohr 6, einen darin eingepressten und/oder eingeklebten inneren Stützring 7 und einen auf den Außenumfang des Gelenkwellenrohrs 6 aufgepressten äußeren Stützring 8 auf, der aus einem Kohlefasermaterial hergestellt sein kann.

Auf die Innenseite des inneren Stützrings 7 ist eine Längsverzahnung 9 des nabenartigen Elements 3 aufgespritzt, die komplementär zu der Längsverzahnung 5 gestaltet ist. Die Längsverzahnung 9 ist aus einem Thermoplastmaterial hergestellt, das z. B. durch kurzfasrige Kohlfasern verstärkt sein kann.

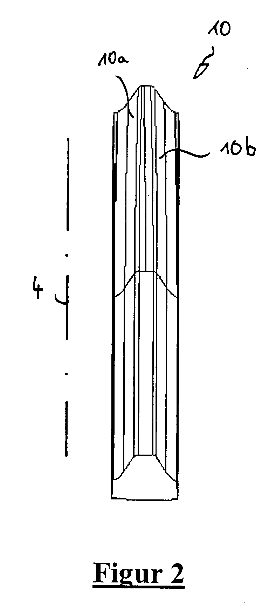

Ein Zahn 10 der Längsverzahnung 9 ist in Figur 2 dargestellt. Bei genauer Betrachtung des Zahns 10 ist ersichtlich, dass die Zahnflanken 10a, 10b des Zahns 10 nicht exakt parallel zur Längsrichtung 4 der Gelenkwellenanordnung sind, sondern dass der Zahn 10 geringfügig bogenförmig gekrümmt ist.

Auch die übrigen Zähne der Verzahnung 9 können bogenförmig gekrümmt sein. Durch eine derartige bogenförmige Gestaltung der Zähne wird ein noch gleichmäßigeres Tragverhalten über die gesamte Zahnlänge und somit insgesamt eine vergleichsweise gleichmäßige Beanspruchung der einzelnen Zähne der Längsverzahnung 9 und somit eine optimale Nutzung der Festigkeitsreserven des Materials erreicht.

## Patentansprüche

1. Gelenkwelle für Fahrzeuge, mit einem ersten Gelenkwellenabschnitt, der über ein Schiebestück (2, 3) mit einem zweiten Gelenkwellenabschnitt drehgekoppelt ist, wobei das Schiebestück ein mit einer Längsverzahnung (5) versehenes und mit einem der beiden Gelenkwellenabschnitte verbundenes wellenartiges Element (2) aufweist, und ein mit einer zu der Längsverzahnung (5) komplementären Längsverzahnung (9) versehenes, mit dem anderen Gelenkwellenabschnitt verbundenes nabenartiges Element (3), wobei das wellenartige Element (2) in das nabenartige Element (3) eingeschoben ist, wodurch in gewissem Umfang eine Relativverschiebung der beiden Gelenkwellenabschnitte in einer Längsrichtung (4) der Gelenkwelle ermöglicht wird,
**dadurch gekennzeichnet, dass** mindestens eine der beiden Längsverzahnungen (9) aus einem Thermoplastmaterial hergestellt ist.

2. Gelenkwelle nach Anspruch 1, **dadurch gekennzeichnet, dass** die aus Thermoplastmaterial hergestellte Verzahnung (9) zahnartige Elemente (10) aufweist, wobei Zahnflanken (10a, 10b) der zahnartigen Elemente (10) sich im Wesentlichen aber nicht exakt in Längsrichtung (4) der Gelenkwelle erstrecken.

3. Gelenkwelle nach Anspruch 2, **dadurch gekennzeichnet, dass** die Zahnflanken (10a, 10b) einen spitzen Winkel mit der Längsachse (4) einschließen.

4. Gelenkwelle nach Anspruch 2 oder 3, **dadurch gekennzeichnet, dass** die Zahnflanken (10a, 10b) bogenförmig gekrümmt sind.

5. Gelenkwelle nach einem der Ansprüche 1 - 4, **dadurch gekennzeichnet, dass** die Verzahnung (9) durch Spritzgießen hergestellt ist.

6. Gelenkwelle nach einem der Ansprüche 1 - 5, **dadurch gekennzeichnet, dass** die aus Thermoplastmaterial hergestellte Verzahnung aus einem mit Kurzfasern verstärkten Thermoplastmaterial besteht.

7. Gelenkwelle nach einem der Ansprüche 1 - 6, **dadurch gekennzeichnet, dass** die Längsverzahnung (9) des nabenartigen Elements (3) aus Thermoplastmaterial hergestellt ist

8. Gelenkwelle nach einem der Ansprüche 1 - 7, **dadurch gekennzeichnet, dass** der Gelenkwellenabschnitt, der fest mit der aus Thermoplastmaterial hergestellten Verzahnung verbunden ist, ein aus einem Laminatmaterial hergestelltes Gelenkwellenrohr (6) aufweist.

9. Gelenkwelle nach Anspruch 8, **dadurch gekennzeichnet, dass** das Laminatmaterial durch Endlosfasern verstärkt ist.

10. Gelenkwelle nach einem der vorangehenden Ansprüche, **dadurch gekennzeichnet, dass** die aus Thermoplastmaterial hergestellte Verzahnung (9) an eine Innenseite eines inneren Stützrings (7) angespritzt ist, der in ein einen der beiden Gelenkwellenabschnitte bildendes Kunststoffrohr (6) eingepresst und/oder einklebt ist.

11. Gelenkwelle nach Anspruch 10, **dadurch gekennzeichnet, dass** auf eine Außenseite des Kunststoffrohrs (6) im Bereich des inneren Stützrings (7) ein äußerer Stützring (8) aufgepresst ist.

12. Gelenkwelle nach Anspruch 11, **dadurch gekennzeichnet, dass** der äußere Stützring aus einem Kohlefasermaterial hergestellt ist.

13. Fahrzeug mit einem Antriebsstrang, der eine Gelenkwelle nach einem der Ansprüche 1 - 12 aufweist.

## Claims

1. A drive shaft for vehicles, having a first drive shaft portion which is rotationally coupled to a second drive shaft portion via a slide (2, 3), wherein the slide has a wave-like element (2) which is provided with a longitudinal tooth system (5) and is connected to one of the two drive shaft portions, and has a hub-like element (3) which is provided with a longitudinal tooth system (9) which is complementary to the longitudinal tooth system (5) and is connected to the other drive shaft portion, wherein the wave-like element (2) is inserted into the hub-like element (3), as a result of which a relative displacement of the two drive shaft portions in a longitudinal direction (4) of the drive shaft is allowed to a certain extent,
**characterised in that** at least one of the two longitudinal tooth systems (9) is produced from a thermoplastic material.

2. A drive shaft according to claim 1, **characterised in that** the tooth system (9) produced from thermoplastic material has tooth-like elements (10), tooth flanks (10a, 10b) of the tooth-like elements (10) extending substantially but not exactly in the longitudinal direction (4) of the drive shaft.

3. A drive shaft according to claim 2, **characterised in that** the tooth flanks (10a, 10b) include an acute angle with the longitudinal axis (4).

4. A drive shaft according to claim 2 or claim 3, **characterised in that** the tooth flanks (10a, 10b) are curved in an arched manner.

5. A drive shaft according to any one of claims 1 to 4, **characterised in that** the tooth system (9) is produced by injection moulding.

6. A drive shaft according to any one of claims 1 to 5, **characterised in that** the tooth system produced from thermoplastic material consists of a thermoplastic material which is reinforced with short fibres.

7. A drive shaft according to any one of claims 1 to 6, **characterised in that** the longitudinal tooth system (9) of the hub-like element (3) is produced from thermoplastic material.

8. A drive shaft according to any one of claims 1 to 7, **characterised in that** the drive shaft portion which is rigidly connected to the tooth system produced from thermoplastic material has a drive shaft pipe (6) which is produced from a laminate material.

9. A drive shaft according to claim 8, **characterised in that** the laminate material is reinforced by continuous fibres.

10. A drive shaft according to any one of the preceding claims, **characterised in that** the tooth system (9) produced from thermoplastic material is injected onto an inner side of an internal supporting ring (7) which is pressed and/or glued into a plastics material pipe (6) forming one of the two drive shaft portions.

11. A drive shaft according to claim 10, **characterised in that** an external supporting ring (8) is pressed onto an outer side of the plastics material pipe (6) in the region of the internal supporting ring (7).

12. A drive shaft according to claim 11, **characterised in that** the external supporting ring is produced from a carbon fibre material.

13. A vehicle with a drive train which has a drive shaft according to any one of claims 1 to 12.

## Revendications

1. Arbre de transmission pour des véhicules comprenant un premier segment d'arbre de transmission qui est couplé solidairement en rotation à un second segment d'arbre de transmission par l'intermédiaire d'une pièce coulissante (2, 3), cette pièce coulissante comprenant un élément en forme d'arbre (2) équipé d'une denture longitudinale (5) et lié à l'un des deux segments d'arbre de transmission, ainsi qu'un élément en forme de moyeu (3) équipé d'une denture longitudinale (9) complémentaire à la denture longitudinale (5) et lié à l'autre segment d'arbre de transmission, l'élément en forme d'arbre (2) étant glissé dans l'élément en forme de moyeu (3), de façon à permettre, dans une mesure donnée, un coulissement relatif des deux segments d'arbre de transmission dans la direction longitudinale (4) de l'arbre de transmission,
**caractérisé en ce qu'**
au moins l'une des deux dentures longitudinale (9) est réalisée en un matériau thermoplastique.

2. Arbre de transmission conforme à la revendication 1,
**caractérisé en ce que**
la denture (9) réalisée en un matériau thermoplastique comporte des éléments (10) en forme de dent, les flancs de dents (10a, 10b) des éléments en forme de dents (10) s'étendant essentiellement mais toutefois pas exactement dans la direction longitudinale (4) de l'arbre de transmission.

3. Arbre de transmission conforme à la revendication 2,
**caractérisé en ce que**
les flancs de dents (10a, 10b) définissent un angle aigu avec l'angle longitudinal (4).

4. Arbre de transmission conforme à la revendication 2 ou 3,
**caractérisé en ce que**
les flancs de dents (10a, 10b) sont recourbés en forme d'arc.

5. Arbre de transmission conforme à l'une des revendications 1 à 4,
**caractérisé en ce que**
la denture (9) est obtenue par moulage par injection.

6. Arbre de transmission conforme à l'une des revendications 1 à 5,
**caractérisé en ce que**
la denture réalisée en matériau thermoplastique est en un matériau thermoplastique renforcé par des fibres courtes.

7. Arbre de transmission conforme à l'une des revendications 1 à 6,
**caractérisé en ce que**
la denture longitudinale (9) de l'élément en forme de moyeu (3) est réalisée en un matériau thermoplastique.

8. Arbre de transmission conforme à l'une des revendications 1 à 7,
**caractérisé en ce que**
le segment d'arbre de transmission qui est relié solidairement à la denture réalisée en un matériau thermoplastique comporte un tube d'arbre de transmission (6) réalisé en un matériau aggloméré stratifié.

9. Arbre de transmission conforme à la revendication 8,
**caractérisé en ce que**
le matériau aggloméré stratifié est renforcé par des fibres sans fin.

10. Arbre de transmission conforme à l'une des revendications précédentes,
**caractérisé en ce que**
la denture (9) réalisée en un matériau thermoplastique est injectée sur la face interne d'une bague d'appui interne (7) qui est emmanchée à force et/ou collée dans un tube en matériau synthétique (6) formant l'un des deux segments d'arbre de transmission.

11. Arbre de transmission conforme à la revendication 10,
**caractérisé en ce qu'**
une bague d'appui externe (8) est emmanchée à force sur la face externe du tube en matériau synthétique (6) dans la zone de la bague d'appui interne (7).

12. Arbre de transmission conforme à la revendication 11,
**caractérisé en ce que**
la bague d'appui externe est réalisée en un matériau en fibres de carbone.

13. Véhicule ayant une ligne d'entraînement comportant un arbre de transmission conforme à l'une des revendications 1 à 12.
